(19) **Europäisches Patentamt**
**European Patent Office**
**Office européen des brevets**

(11) **EP 2 276 716 B1**

(12) **EUROPEAN PATENT SPECIFICATION**

(45) Date of publication and mention
of the grant of the patent:
**02.11.2011 Bulletin 2011/44**

(51) Int Cl.:
***C04B 41/53*** *(2006.01)*    ***E04G 23/02*** *(2006.01)*

(21) Application number: **09729434.2**

(22) Date of filing: **03.04.2009**

(86) International application number:
**PCT/EP2009/054024**

(87) International publication number:
**WO 2009/124890 (15.10.2009 Gazette 2009/42)**

(54) **METHOD AND DEVICE FOR REMOVING AN IONIC IMPURITY FROM BUILDING STRUCTURES**

VERFAHREN UND VORRICHTUNG ZUR ENTFERNUNG EINER IONISCHEN VERUNREINIGUNG AUS BAUKONSTRUKTIONEN

PROCÉDÉ ET DISPOSITIF POUR L'ÉLIMINATION D'UNE IMPURETÉ IONIQUE À PARTIR DE STRUCTURES DE CONSTRUCTION

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **08.04.2008 EP 08154186**
**08.04.2008 US 43232 P**
**06.10.2008 DK 200801406**

(43) Date of publication of application:
**26.01.2011 Bulletin 2011/04**

(73) Proprietor: **Technical University of Denmark**
**2800 Lyngby (DK)**

(72) Inventors:
• **RÖRIG-DALGAARD, Inge**
**DK-3450 Allerød (DK)**
• **OTTOSEN, Lisbeth, M.**
**DK-3400 Hillerød (DK)**

(74) Representative: **Nilausen, Kim**
**Zacco Denmark A/S**
**Hans Bekkevolds Allé 7**
**2900 Hellerup (DK)**

(56) References cited:
**DE-A1- 19 851 702**

**Description**

The invention relates to a method for removing an ionic impurity from building structures.

The invention further relates to a device for removing an ionic impurity from building structures.

In many years it has been a problem that salt and/or water causes deterioration of wall materials in buildings (i.e. clay bricks, sandstones, mortar etc.).

Different techniques have been tried and especially two different techniques are used. One technique is to establish climate chambers. This technique is very energy and time consuming and rather large areas have to be cordoned off.

Another technique is based on wet or dry poultices. The problem with both techniques is that only minor parts of ions are transported out from the affected wall materials and therefore new damaging salt nucleation can happen again under the actual climate conditions.

As an example several expensive desalination campaigns to try to rescue murals from a church vault only resulted in minor improvements and following repainting of the murals.

Further this kind of treatment is often only temporary and not a lasting solution. Therefore a great risk of loosing murals exists.

If salts are not removed sufficient from affected walls, before any renovating, the result will be the need for yet desalination.

According to electrokinetic theories, water and ion transport can be initiated by applying an electric potential gradient across a wet and salt loaded porous material, desalination through electromigration, which is movement of ions in a solution in an applied electric field, should occur.

EP 0 723 947 A1 discloses a process for the regeneration and protection of a concrete structure comprising metal reinforcement, where the metal of the reinforcement constitutes one electrode and an outer electrode disposed in contact with a reserve of basic electrolytic solution adapted to migrate within the concrete until it meet the interstitial water contained in said concrete, thus generating an osmotic current of diffusion between the reserve of electrolytic solution and the interstitial water in the concrete.

To avoid pitting at the reinforcement metal the voltage must not exceed 2.3 V.

Therefore the material constituting the outer electrode is chosen so that the voltage between the electrode and the external reinforcement of concrete is less than 2.3 volts. The electrodes are not connected to an external electric source.

Before applying the outer electrode the outer surface of the concrete is washed down with a high pressure water jet or by sandblasting. Hereafter a layer of sticky paste containing an electrolytic solution is applied to the outer surface of the concrete with the purpose of diffusing a base aqueous solution into the concrete to correct the pH of the interstitial water, the solution being held in contact with the external surface of the concrete and an electric circuit being completed by a wire connecting an electrode immersed in the solution and one of the reinforcing bars buried in the concrete.

The solution is intended to migrate into the concrete.

DE 19851702 A1 discloses a process for the electro-osmotic reconstruction of building material comprises applying a material having high ion exchange and adsorptive ion-bonding as sacrificial plaster (12, 14) to the outer surface of the building material (10), inserting a flat anode (16), and then carrying out electro-osmosis over a relatively short time period.

The sacrificial layer is applied to the outer surface of the masonry as a base layer and after approximate 30 minutes an upper layer of the same material is applied thereby embedding an electrode between the two layers.

The method is trying to obtain improved (higher) ion changing properties and high capacity ion binding properties, but do not limit the changes in the pH value.

If such treatment is used in relation to murals or other similar cultural heritage, the murals most certainly will be damaged when the sacrificial layer is removed, since such treatment is not very kind to murals or similar ornamentation.

By use of electromigration a controlled ion transport will occur in porous wet materials like bricks. The idea is to transport the damaging ions out of bricks and mortar and into an accumulation layer which can be removed after ended treatment.

Another aspect is that at the same time, or after the desalination (or removal of damaging ions), drying through electroosmosis should continue.

A typical content of salt in a salt loaded brick can be 0,5 - 1,0 % per weight where experiments have shown that electroosmotic dewatering initiates when the salt content reaches a reduction of 50 - 100 times the starting level of approximately 0,5 -1,0 % per weight.

Following a well known and accepted transport process, electromigration, is used, i.e. movement of ions in a solution in an applied electric DC field. In wet porous clay brick masonry, which most Danish church vaults consist of, electromigration is expected to be an efficient transport mechanism for desalination of the church vaults. The advantage of using an applied electric DC field is that the ions are affected directly and they are therefore less poultice and substrate dependent than other desalination methods.

Some electromigration desalination methods have adverse effects, such as discoloration of the wall area close to the electrodes due to deterioration of the electrode caused by electrode reaction.

To avoid such discoloration electrodes manufactured of titanium or oxidised titanium can be used.

The electrodes can also be manufactured of a conductive grating.

Other methods depend on electrodes placed in drilled holes in the walls. Such methods cause damages to the treated structure part. It may be possible to place the holes at appropriate positions, but nevertheless avoiding making holes in the structure part to be treated is to prefer.

The aim of the invention is to provide an effective and durable method for removing an ionic impurity from building structures and thereby provide a desalination of building structures, such as existing walls, where no holes are to be drilled in the surface to be treated and where the pH values in the treatment area are controlled and held in a fairly neutral interval during removal of an ionic impurity. It is further an aim to provide a method for removing an ionic impurity from building structures which method is gentle and kind to murals or other similar cultural heritage.

Methods of reducing the pH value by adding clay with a natural high content of carbonate is known, but a serious drawback in these known methods is that you do not know for how long the treatment will proceed and you do not know for how long the clay rich in carbonate will protect the building structure from being damaged by too low or too high pH values.

This is achieved according to the invention by using a method where it is possible to calculate before starting the treatment how much neutralization material is needed (dependent of current strength and duration time).

To achieve a satisfactory removal of an ionic impurity where the pH values in the treatment area are controlled and held in a fairly neutral interval a new method is developed.

It is achieved by the method comprising the steps of:

-   forming at least one poultice by mixing a clay compound with an ion exchange component;
-   placing at least one positive electrode (anode) and at least one negative electrode (cathode) at the same or separate poultices;
-   position one or more poultices at the building structure; and
-   apply an electric current to the electrodes.

In an embodiment at least one poultice is formed by mixing a clay compound with an acid.

In an embodiment of the method the neutralization need is calculated before the treatment is carried out (dependent of current strength and duration time) and added as buffer material to the poultice in the calculated amount to ensure the needed neutralization effect.

Hereby it is possible to determine previous to the treatment for how long the added neutralization material will last. This method gives the opportunity to calculate when the electrodes and the poultice material must be checked and possibly added with more neutralisation material or new buffer material.

To obtain this effect kaolin clay can be used as basis material in the poultice.

To further ensure the effect of the method calcium carbonate can be used as buffer material.

It is further an aim with the invention to provide a device for providing an effective and durable removal of an ionic impurity from building structures, such as existing walls, where no holes are to be drilled in the surface to be treated and where the pH values in the treatment area can be controlled and held in a fairly neutral interval during removal of an ionic impurity.

This is achieved by a device according to the invention, where the device includes electrode units consisting of at least one electrode being a positive electrode (anode) or a negative electrode (cathode) and at least one poultice including an ion exchange component, where carbonate is applied to a poultice to provide a buffer at the positive electrode (anode) and an acid is applied to a poultice to provide a buffer at the negative electrode(cathode).

In an embodiment an electrode unit includes one or more electrodes, a poultice including basis material, and buffer components.

In another embodiment the basis material comprises kaolin clay, and the buffer material comprises carbonate.

In yet an embodiment the carbonate in the buffer material is calcium carbonate.

In an alternative embodiment the electrodes can be connected to the same electrode unit. In such an embodiment the poultice of the electrode unit includes both acid and carbonate.

In a further alternative embodiment the poultice can be a multi layer poultice (two or more layers) where different acid concentrations could be applied to different layers. The multi layer poultice can include different layers with different values relating to the layers. Some layers can be neutral, some layers can have different alkaline concentrations and some layers can have different acid concentrations. It is also possible that two or more of the layers can be identical.

In an embodiment with a three layer poultice, the multi layer poultice comprises following layers: a first layer closest to the electrode includes kaolin clay added with acid, a second (middle) layer including kaolin clay added with liquid, and a third layer including kaolin clay added with carbonate and liquid water.

New electrode units consisting of: electrodes, poultices of kaolin clay and buffer components which were able to neutralize the produced acid and base production are developed. These electrode units have good ability to retain neutral pH values in the substrate.

Hereby is achieved an electromigration desalination effect and thereby removal of an ionic impurity with no obvious adverse effects.

An effect of removing ionic impurities i.e. from a building structure is desalination of the building structure. In the following desalination is used as the general expression of removing ionic impurities from building structures, but it is obvious that the method and apparatus can be used to remove other ionic impurities.

Following further embodiments of the invention will be described with reference to the drawing, where

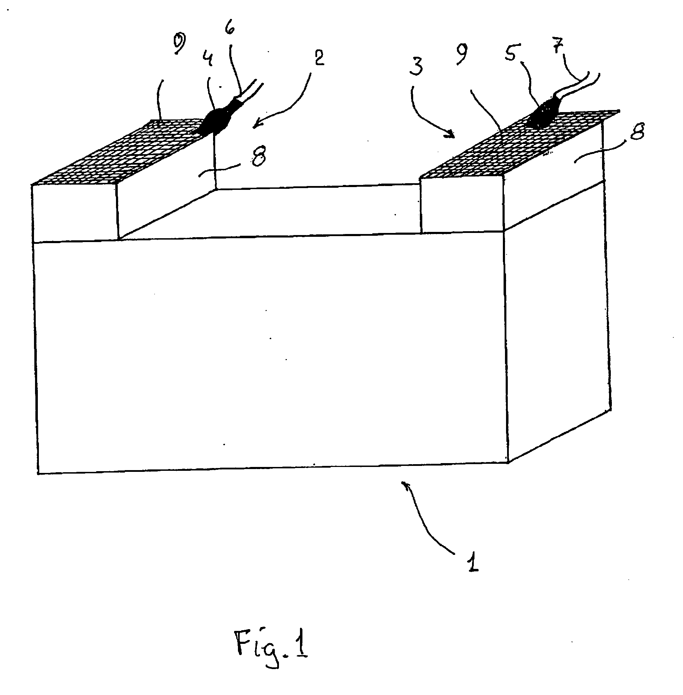

Figure 1    shows an experimental configuration of a piece of a wall provided with electrode units.

In a method of removing an ionic impurity from building structures according to an embodiment of the invention is based on determination of current strength supplied from a current supply, how much neutralization material is needed to achieve and maintain during treatment a substantially neutral pH value to avoid damaging the building structure.

The method is focused on electromigration, which different to other methods acts directly on ions. As the ions are directly affected by an electric field the method is though to be more independent of substrate material characteristics and ion content than other methods.

In one embodiment, the method comprises the steps of:

- forming at least one electrode unit by mixing a clay compound with an ion exchange component;
- placing at least one positive electrode (anode) and at least one negative electrode (cathode) at the same or separate electrode unit and thereby forming a poultice;
- providing a buffer in a poultice by applying a carbonate to the poultice at the positive electrode (anode) and providing a buffer in a poultice by applying an acid to the poultice at the negative electrode (cathode);
- position one or more poultices at the building structure; and
- apply an electric current to the electrodes.

By application of poultices and addition of water an indirect ion-transport and ion-accumulation can take place as a result of concentration gradients or evaporation as a driving force

Earlier electrochemical methods suffer from adverse effects, such as discoloration close to the electrodes due to deterioration of the electrode caused by the electrode reaction.

Further extreme pH changes alter the original material significantly and can not be accepted especially not when dealing with cultural heritage.

By use of electromigration a controlled ion transport will occur in porous wet materials like bricks. By using the method according to the invention it is possible to transport the damaging ions out of building structures and into an accumulating layer which can be removed after ended treatment. The method is also applicable to treatment of church vaults, bricks, mortar, and masonry in general

In an embodiment of the method it is possible to position the poultice or the poultices on the surface of the masonry in a place away from the murals in such a way that the poultices do not cover the murals. Thereby the risk to damage the murals is reduced, especially when removing the poultices from the surface of the masonry.

Further the invention minimizes the risk of discoloration of the wall area close to the electrodes due to deterioration of the electrode caused by electrode reaction.

In another embodiment the poultice or poultices can be positioned on the backside of the masonry, thereby reducing the risk of damaging or discoloration of the murals.

An electric circuit in a wet brick is maintained by electrons in the electrodes which through electrode reactions are transformed to iontransport in the pore solution and visa versa.

Among others will this formation, called electrode reactions result in varying extends of acid (H+) and base (OH-):

$$\text{Anode (+): } H_2O \text{ (aq)} \rightarrow 2H^+ + \tfrac{1}{2} O_2(g) + 2e^-$$

$$\text{Cathode (-): } H_2O \text{ (aq)} + e^- \rightarrow OH^- + \tfrac{1}{2} H_2 \text{ (g)}$$

If no precautions are taken against the acid and base production at the electrodes, pH of the masonry will change. Exposure of acid to ceramic material (roofing tiles) results in increased porosity and thus acid is known to damage the ceramic material. Additionally, the effect of the method will most properly decrease as the current will transport H+ and OH- instead of the wanted anions and cations when present, since $H^+$ and OH- possess exceptionally high ionic mobility. Reduced transport number and thereby also chloride transport has been measured by desalination of concrete with electromigration mainly attributed to the OH- generation and its higher mobility. This implies that there is a limit in the amount of extraction and complete electromigration desalination is impossible, if no action is taken against this OH- generation when dealing with concrete.

During the electromigration process acid is produced by the anode. $H^+$ is inevitable produced as a part of the electric circuit by the anode; however, hindering the produced $H^+$ in entering the brick is possible.

It is possible to calculate the produced acid and neutralize it by addition of the actual needed ion exchange component. The ion exchange component is a component, that through its ability to exchange ions maintains its preferred state and the total capacity of an exchanger and thereby time where it is able to neutralize is dependent of the ion exchange components concentration.

Ion exchange occurs between equivalent amounts of ions to preserve electro neutrality at all times in both the exchanger and solution phases. One mole $H^+$ is produced by use of one mole $e^-$ which means that the $H^+$ production is dependent of the applied current.

By calculation of the consumed coulomb amount by a specific current strength and duration:

$$Q = I*t$$

conversion of coulomb amount to mol $H^+$

$$n_{H^+} = \frac{Q \cdot n_{H^+}}{F \cdot n_{e^-} \cdot n_{H^+}}$$

the concentration to be neutralized is calculated.

Carbonates ability to neutralize acid in the development of electrode units is used. Neutralization need is calculated before the treatment (dependent of current strength and duration time) and the carbonates are added as buffer material to a basis material in the calculated amount to ensure the needed neutralization effect. The basis material is preferably chosen within kinds of clay and most preferably kaolin clay.

Carbonate can be added to the clay as a part of different chemical compounds. Calcium carbonate is a suitable carbonate as it is a harmless component and has a very low solubility, but other carbonates can be used as well, just as long as they do not damage the building structure to be treated.

Calcium carbonate is also the most abundant and the type present in tile work clay from previous work. Contrary to when the calcium carbonate in tile work is used as buffer component, a poultice which solely consists of kaolin clay and calcium carbonate is a clean system which makes it easier to control the processes.

An example of calculation of the neutralization process, taking the carbonate percentage in calcium carbonate into account is shown:

$$\% \ CO_3 \ \text{in} \ CaCO_3: \ \frac{m_{CO_3^{2-}}}{m_{CaCO_3}} = \frac{60,01g}{100,09} \sim 60 \ \%$$

the exact mol carbonate was added to the clay mixture:

$$m_{CO_3^{2-}} = n_{CO_3^{2-}} \times M_{CO_3^{2-}} \times \%CO_3$$

Where $n_{CO_3^{2-}} = n_{H^+}$ to be neutralized.

It is obvious that if both the anode and cathode are placed on the same side of the brick or masonry, the current distribution is non-uniform resulting in a non-uniform consumption of ion exchange component and undesired pH changes close to the electrodes.

To compensate for this effect, it is possible to widen or broaden the electrode unit. To further ensure an appropriate transmission of current from the cords through the electrodes to the poultice, the electrodes can be configured as gratings and placed at top of or in the poultice which will result in satisfying results and to maintain a stable pH.

To calculate the needed acetic acid to the kaolin clay, the consumed coulomb amount was calculated and converted to mol hydroxide. Dependent of the used acetic acid concentration the needed volume could change.

To establish an electric circuit, electrodes with an impressed current is needed. For the extraction of the damaging ions, an accumulating material (poultice) is needed. A traditional poultice can consist of one or more of the following components: cellulose, clay (bentonit, kaolin), newspaper, sand, filler etc. The idea of the present method is to combine use of poultice and electromigration, by improving the poultice to electromigration conditions.

To be sure to get fine results it is important to ensure:

- Clean poultice with low initial ion content: to isolation of the electromigration effects, make them more clear during the documentation phase and hinder new ion transport into the brick/mortar.

- Good conductivity: to maintain the electric circuit.

- Good workability and thereby contact to the substrate.

- Limited shrinkage to maintain the god contact to the substrate.

Contrary to traditional desalination with poultices the material characteristics (e.g. capillarity) of the poultice compared to the material characteristics of the substrate are not essential, since the driving force is the current and not diffusion or convection. This fact makes the method for removal of an ionic impurity more robust compared to other desalination methods.

Traditional kaolin clay was chosen as basis material due to its purity, low shrinkage, god workability and conductivity when a liquid is added. The liquid to solid ratio between kaolin clay and liquid was decided in order to obtain the right consistence of the mixture. A suitable consistence can be achieved by adding 40 % or more of a liquid to the kaolin clay.

The liquid can be distilled or demineralised water or the liquid can be an acid mixed with distilled or demineralised water. If the concentration of the acid is suitable for the removal of ionic impurities the liquid can be replaced by the acid since the purpose of the liquid also is to obtain the right consistence of the mixture to form the electrode units.

The amount of acid and e.g. water together forms 40% or more of a liquid in relation to the dry content of the poultice.

The pH control can take place at the anode, at the cathode or at both the anode and cathode.

The pH control can be performed by adding acid to the buffer electrode forming the cathode and/or adding carbonate to the buffer electrode forming the anode.

When taking the acid production at the anode into account, using buffer compound in the anode clay the extraction of an-ions improves considerably. The same applies to extraction of cat-ions using buffer compound in the cathode clay, though the performance of the desalination process is unstable and ends before satisfying desalination is obtained. When taking as well the acid as the base production at the electrodes into account using buffer compounds in both the anode and the cathode poultice, a stable desalination performance is obtained even at very low ion contents and only minor unproblematic voltage increase will occur contrary the other methods.

When using the basis poultice, only a very little chloride amount of ions will be extracted before the voltage increases. Addition of buffer compounds to the anode poultice leads to a considerable higher total ion extraction but the desalination process will probably end before a sufficiently satisfactory value is obtained. If buffer compounds are used in both anode and cathode poultice even better ion reduction is obtained.

Development of the method and the device for removing an ionic impurity from building structures resulted in steady neutral pH in the masonry and desalination from a normal high problematic ion content in church vaults to a very low and completely unproblematic ion content.

Corresponding to a certain current strength a certain amount of carbonate and/or acid according to the above determining or calculation method is added. This calculation gives the period for how long the treatment can go on without surveillance and without maintenance.

The current strength, the amount of carbonate, the amount of acid, and the time are linked together being proportional to each other.

A device for removing an ionic impurity from building structures 1 includes a current supply (not shown), electrode units 2, 3 consisting of at least one positive electrode (anode) 4 and at least one negative electrode (cathode) 5, conductive cords or cables 6, 7 connecting the electrodes with the current supply, and at least one poultice 8 including an ion exchange component.

In figure 1 is shown electrode units 2, 3 where the cords or cables 6, 7 are connected to poultices 8 through a conductive grating 9.

The purpose of the grating 9 is to ensure a uniform distribution of current to the poultice 8.

In an embodiment the poultice is arranged at the positive electrode (anode) 4 and the buffer component is carbonate.

In a further embodiment the carbonate is added to the poultice as calcium carbonate.

In another embodiment the poultice is arranged at the negative electrode (cathode) 5 and the buffer component is a weak acid.

In an embodiment the week acid is acetic acid. In principle all weak acids can be used as long as the acid is capable of releasing hydrogen ions.

In further an embodiment the electrode units 2, 3 comprises electrodes 4, 5, basis material and one or more buffer components.

In yet an embodiment the basis material comprises kaolin clay.

To modify the current strength or the number of electrodes needed it is possible to adjust the distance between the poultices.

In an alternative embodiment the electrodes 4, 5 can be connected to the same electrode unit 2 or 3. In such an embodiment the poultice 8 of the electrode unit 2, 3 includes both acid and carbonate.

As described before the pH control can take place at the anode, at the cathode or at both the anode and cathode.

The pH control can be performed by adding acid to the electrode unit forming the cathode and/or adding carbonate to the electrode unit forming the anode.

The measured pH values are not extreme and they are not expected to cause damage to the substrate, though if the pH decrease to 5.4 is found to be problematic further improvement can be made, e.g. introduction of a poultice including more than one buffer layer.

In an embodiment of a multi layer poultice (two or more layers) different acid concentrations could be applied to different layers. The multi layer poultice can include different layers with different values relating to the layers. Some layers can be neutral, some layers can have different alkaline concentrations and some layers can have different acid concentrations. It is also possible that two or more of the layers can be identical.

In an embodiment with a three layer poultice, the multi layer poultice 8 comprises following layers: a first layer closest to the electrode 4, 5 includes kaolin clay added with acid, a second (middle) layer including kaolin clay added with liquid, and a third layer including kaolin clay added with carbonate and liquid.

The liquid can be distilled or demineralised water or the liquid can be an acid mixed with distilled or demineralised water. If the concentration of the acid is suitable for the removal of ionic impurities the liquid can be replaced by the acid since the purpose of the liquid also is to obtain the right consistence of the mixture to form the electrode units.

The main purpose of the middle layer is to ensure as little correspondence between the acidic clay and the alkaline clay as possible.

The function of the alkaline clay, which is the third layer, is to neutralise the acid, which acid otherwise would diffuse into the underlying material (masonry).

The amount of base in the alkaline clay should be added in proportion to the amount of acid added to the acidic clay to keep the pH value in the poultice in the desired balance.

In yet an embodiment the layers can be separated by a separating layer such as paper or another thin material. A material suitable for such separation purpose could be Japanese Paper, filter paper or another type of porous paper.

In a first example acetic acid ($CH_3COOH$) is used as buffer component in the cathodes. A $pK_a$ value of acetic acid being 4.7 and a buffer capacity between pH 3.8 and 5.8, shows to be too acidic for the masonry. The only transport of $H^+$- ions from the acetic acid into the masonry from the cathode unit must occur through diffusion since electromigration transports $H^+$ in the opposite direction.

The idea according to an embodiment of the invention is to hinder this acid diffusion by placing the alkaline clay layer developed for poultice at the anode between the acidic clay and the underlying brick and mortar. The advantage of the previously developed alkaline clay consisting of kaolin clay, calcium carbonate and distilled water was, that calcium carbonates solubility is very low and therefore undissolved in distilled water and first by acid influence it is dissolved into calcium and carbonate where the carbonate neutralize the acid at simultaneously decomposition.

In another example a three layered cathode unit with Japanese paper in between the layers is used and this embodiment hinders acid diffusion and a pH of 7.6 in the layer which will have contact with the underlying brick and mortar is considered unproblematic. Application of the new three layered cathode unit will not result in any sign of mortar crumbling when placed at the wall section.

In an embodiment the clay composition corresponding to the treatment of one brick can be composed in such a way that the anode clay consists of: 50 g kaolin clay, 100 g calcium carbonate and 100 g distilled water and the cathode clay consists of: 150 g kaolin clay and 100 g 5 M acetic acid ($CH_3COOH$). This composition is useful for a one layer poultice, different compositions can be used in relation to poultices of more than layer.

The composition from the above can be scaled up to a suitable amount of bricks corresponding to a piece of masonry to be treated.

A possible composition proportion for a one layer poultice of the anode clay can be 1 portion of kaolin clay to 2 portions of calcium carbonate to 2 portions of distilled water and a possible composition proportion for a one layer poultice of the cathode clay can be 3 portions of kaolin clay to 2 portions of acetic acid ($CH_3COOH$), preferably in a 5 mole concentration.

A weaker concentration of acetic acid can be used, but then the buffer capacity will be reduced.

The longer distance between the electrodes, the higher current strength needed, under the same conditions as before.

The distance between the electrodes or the current strength can also be modified in relation to the internal ionic content in the structure to be treated. The invention is not limited to church vaults, since it is possible to use the method and the device for desalination of building structures on existing buildings or building elements exposed to salt. The method is suitable for desalination of old building structures such as church vaults, especially when the vaults (or walls) are provided with murals worthy of preservation.

Further it is possible to position more poultices in a distance from each other, which distance depends on one or more of following parameters: the degree of damage to the building, the size of the poultice, the amount of buffer material comprised in the poultices, and the current strength.

The invention is also intended for use in new build building structures as well.

**Claims**

1. A method for removing an ionic impurity from building structures comprising the steps of:

   - forming at least one electrode unit (2, 3) by mixing a clay compound with an ion exchange component;
   - placing at least one positive electrode (anode) (4) and at least one negative electrode (cathode) (5) at the same or separate electrode unit (2, 3) and thereby forming a poultice (8);
   - providing a buffer in a poultice (8) by applying a carbonate to the poultice (8) at the positive electrode (anode) (4) and providing a buffer in a poultice (8) by applying an acid to the poultice (8) at the negative electrode (cathode) (4);
   - position one or more poultices (8) at the building structure (1); and
   - apply an electric current to the electrodes (4, 5).

2. A method for removing an ionic impurity according to claim 1 **characterized in** forming at least one poultice (8) by mixing a clay compound with an acetic acid.

3. A method for removing an ionic impurity according to claim 1 or 2, **characterized in that** neutralization need is calculated before the treatment is carried out (dependent of current strength and duration time) and added as buffer material to the basis material in the calculated amount to ensure the needed neutralization effect.

4. A method for removing an ionic impurity desalination according to claim 3, **characterized in that** kaolin clay is used as basis material.

5. A method for removing an ionic impurity desalination according to claim 3 or 4, **characterized in that** the carbonate applied to the poultice is calcium carbonate.

6. A device for removing an ionic impurity from building structures, the device including at least one electrode unit (2, 3), at least one positive electrode (anode) (4) and at least one negative electrode (cathode) (5) placed at the same or separate electrode unit (2, 3) and buffer component thereby forming a poultice (8) including an ion exchange component **characterized in that** carbonate is applied to a poultice (8) to provide a buffer at the positive electrode (anode) (4) and an acid is applied to a poultice (8) to provide a buffer at the negative electrode (cathode) (4).

7. A device according to claim 6, **characterized in that** an electrode unit (2, 3) includes one or more electrodes (4, 5), a poultice (8) including basis material and buffer components.

8. A device according to claim 7, **characterized in that** the basis material includes kaolin clay.

**9.** A device according to claim 6, 7 or 8 **characterized in that** the buffer component is calcium carbonate.

**10.** A device according to any one of the claims 6 or 7, **characterized in that** an electrode unit (2, 3) includes more than one buffer layer.

**11.** A device according to claim 10, **characterized in that** a first layer closest to the electrode (4, 5) includes kaolin clay added with acid, a second (middle) layer including kaolin clay added with a liquid, and a third layer including kaolin clay added with carbonate and a liquid.

**12.** A device according to claim 11, **characterized in that** the acid is acetic acid.

**13.** A device according to claim 11 or 12, **characterized in that** the carbonate is supplied in form of calcium carbonate.

**14.** A device according to claim 11, **characterized in that** the liquid includes demineralised water or distilled water or acid.


**Patentansprüche**

**1.** Verfahren zur Entfernung einer ionischen Verunreinigung aus Baukonstruktionen, umfassend die Schritte:

- Bilden mindestens einer Elektrodeneinheit (2, 3) durch Mischung einer Tonverbindung mit einer Ionenaustauschkomponente;
- Anbringen mindestens einer positiven Elektrode (Anode) (4) und mindestens einer negativen Elektrode (Kathode) (5) an derselben oder der separaten Elektrodeneinheit (2, 3) und dadurch Bilden eines Umschlags (8);
- Bereitstellen eines Puffers in einem Umschlag (8) durch Aufbringen eines Carbonats auf den Umschlag (8) an der positiven Elektrode (Anode) (4) und Bereitstellen eines Puffers in einem Umschlag (8) durch Aufbringen einer Säure auf den Umschlag (8) an der negativen Elektrode (Kathode) (4);
- Positionieren eines oder mehrerer Umschläge (8) an der Baukonstruktion (1); und
- Aufbringen eines elektrischen Stroms auf die Elektroden (4, 5).

**2.** Verfahren zur Entfernung einer ionischen Verunreinigung nach Anspruch 1, **dadurch gekennzeichnet, dass** zumindest ein Umschlag (8) durch Mischung einer Tonverbindung mit einer Essigsäure gebildet wird.

**3.** Verfahren zur Entfernung einer ionischen Verunreinigung nach Anspruch 1 oder 2, **dadurch gekennzeichnet, dass** ein Neutralisationsbedarf vor einer Durchführung der Behandlung (abhängig von der Stromstärke und Zeitdauer) berechnet wird und dem Basismaterial als Puffermaterial in der berechneten Menge zugefügt wird, um den erforderlichen Neutralisationseffekt sicherzustellen.

**4.** Verfahren zur Entfernung einer ionischen Verunreinigung-Entsalzung nach Anspruch 3, **dadurch gekennzeichnet, dass** als Basismaterial Kaolin-Ton verwendet wird.

**5.** Verfahren zur Entfernung einer ionischen Verunreinigung-Entsalzung nach Anspruch 3 oder 4, **dadurch gekennzeichnet, dass** das auf den Umschlag aufgebrachte Carbonat ein Calciumcarbonat ist.

**6.** Vorrichtung zur Entfernung einer ionischen Verunreinigung aus Baukonstruktionen, welche Vorrichtung mindestens eine Elektrodeneinheit (2, 3), mindestens eine positive Elektrode (Anode) (4) und mindestens eine negative Elektrode (Kathode) (5) enthält, angebracht an derselben oder der separaten Elektrodeneinheit (2, 3) und einer Pufferkomponente, wobei ein Umschlag (8) gebildet wird, enthaltend eine Ionenaustauschkomponente, **dadurch gekennzeichnet, dass** zur Bereitstellung eines Puffers an der positiven Elektrode (Anode) (4) ein Carbonat auf einen Umschlag (8) aufgebracht wird, und zur Bereitstellung eines Puffers an der negativen Elektrode (Kathode) (4) eine Säure auf einen Umschlag (8) aufgebracht wird.

**7.** Vorrichtung nach Anspruch 6, **dadurch gekennzeichnet, dass** eine Elektrodeneinheit (2, 3) eine oder mehrere Elektroden (4, 5) enthält, wobei ein Umschlag (8) ein Basismaterial und Pufferkomponenten enthält.

**8.** Vorrichtung nach Anspruch 7, **dadurch gekennzeichnet, dass** das Basismaterial einen Kaolin-Ton enthält.

9. Vorrichtung nach Ansprüche 6, 7 oder 8, **dadurch gekennzeichnet, dass** die Pufferkomponente ein Calciumcarbonat ist.

10. Vorrichtung nach irgendeinem der Ansprüche 6 oder 7, **dadurch gekennzeichnet, dass** eine Elektrodeneinheit (2, 3) mehr als eine Pufferschicht enthält.

11. Vorrichtung nach Anspruch 10, **dadurch gekennzeichnet, dass** eine erste Schicht, die der Elektrode (4, 5) am nächsten ist, einen Kaolin-Ton enthält, dem Säure zugesetzt ist, eine zweite (mittlere) Schicht einen Kaolin-Ton enthält, dem eine Flüssigkeit zugesetzt ist, und eine dritte Schicht einen Kaolin-Ton enthält, dem ein Carbonat und eine Flüssigkeit zugesetzt sind.

12. Vorrichtung nach Anspruch 11, **dadurch gekennzeichnet, dass** die Säure eine Essigsäure ist.

13. Vorrichtung nach Anspruch 11 oder 12, **dadurch gekennzeichnet, dass** das Carbonat in Form von Calciumcarbonat zur Verfügung gestellt wird.

14. Vorrichtung nach Anspruch 11, **dadurch gekennzeichnet, dass** die Flüssigkeit entmineralisiertes Wasser oder destilliertes Wasser oder Säure enthält.

**Revendications**

1. Procédé pour l'élimination d'une impureté ionique à partir de structures de construction, comprenant les étapes de:

   - former au moins une unité d'électrode (2, 3) en mélangeant un composé d'argile avec un composant d'échange d'ions;
   - placer au moins une électrode positive (anode) (4) et au moins une électrode négative (cathode) (5) à la même unité d'électrode ou séparée (2, 3) et ainsi formant un cataplasme (8);
   - fournir un tampon dans un cataplasme (8) en appliquant un carbonate pour le cataplasme (8) à l'électrode positive (anode) (4) et fournir un tampon dans un cataplasme (8) en appliquant un acide pour le cataplasme (8) à l'électrode négative (cathode) (4);
   - placer un ou plusieurs cataplasmes (8) à la structure de construction (1), et
   - appliquer un courant électrique aux électrodes (4, 5).

2. Procédé pour l'élimination d'une impureté ionique selon la revendication 1, caractérisé en formant au moins un cataplasme (8) en mélangeant un composé d'argile avec un acide acétique.

3. Procédé pour l'élimination d'une impureté ionique selon la revendication 1 ou 2, **caractérisé en ce que** le besoin de neutralisation est calculé avant que le traitement ne soit effectué (en fonction de la force et de la durée actuelles) et ajouté en tant que matériau tampon au matériau de base dans le montant calculé afin d'assurer l'effet de neutralisation nécessaire.

4. Procédé pour l'élimination d'une impureté ionique de dessalement selon la revendication 3, **caractérisé en ce que** l'argile kaolinite est utilisée en tant que matériau de base.

5. Procédé pour l'élimination d'une impureté ionique de dessalement selon la revendication 3 ou 4, **caractérisé en ce que** le carbonate appliqué au cataplasme est le carbonate de calcium.

6. Dispositif pour l'élimination d'une impureté ionique à partir de structures de construction, le dispositif comprenant au moins une unité d'électrode (2, 3), au moins une électrode positive (anode) (4) et au moins une électrode négative (cathode) (5) placées à la même unité d'électrode ou séparée (2, 3) et le composant tampon ainsi formant un cataplasme (8) comprenant un composant d'échange d'ions, **caractérisé en ce que** le carbonate est appliqué à un cataplasme (8) pour fournir un tampon à l'électrode positive (anode) (4) et un acide est appliqué à un cataplasme (8) pour fournir un tampon à l'électrode négative (cathode) (4).

7. Dispositif selon la revendication 6, **caractérisé en ce qu'**une unité d'électrode (2, 3) comprend une ou plusieurs électrodes (4, 5), un cataplasme (8) comprenant du matériel de base et des composants de tampon.

8. Dispositif selon la revendication 7, **caractérisé en ce que** le matériau de base comprend l'argile kaolinite.

9. Dispositif selon les revendications 6, 7 ou 8, **caractérisés en ce que** le composant tampon est du carbonate de calcium.

10. Dispositif selon l'une quelconque des revendications 6 ou 7, **caractérisé en ce qu'**une unité d'électrode (2, 3) comprend plus d'une couche tampon.

11. Dispositif selon la revendication 10, **caractérisé en ce qu'**une première couche étant la plus proche de l'électrode (4, 5) comprend l'argile kaolinite additionnée de l'acide, un deuxième (au milieu) couche d'argile kaolinite additionnée d'un liquide et une troisième couche comprenant l'argile kaolinite additionnée du carbonate et d'un liquide.

12. Dispositif selon la revendication 11, **caractérisé en ce que** l'acide est l'acide acétique.

13. Dispositif selon la revendication 11 ou 12, **caractérisé en ce que** le carbonate est fourni sous forme de carbonate de calcium.

14. Dispositif selon la revendication 11, **caractérisé en ce que** le liquide contient de l'eau déminéralisée ou de l'eau distillée ou de l'acide.

Fig.1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0723947 A1
- DE 19851702 A1